# EUROPEAN PATENT SPECIFICATION

(11) **EP 3 973 781 B1**
(45) Date of publication and mention of the grant of the patent: **10.12.2025**
(21) Application number: 20810341.6
(22) Date of filing: 28.02.2020
(51) Int. Cl.: A23G 9/32, A23D 9/02, A23G 1/50, A23D 9/00, A23G 1/36, A23G 9/48

(54) **OIL AND FAT COMPOSITION FOR FROZEN DESSERT AND CHOCOLATES FOR FROZEN DESSERT**
ÖL- UND FETTZUSAMMENSETZUNG FÜR EIN GEFRORENES DESSERT UND SCHOKOLADEN FÜR EIN GEFRORENES DESSERT
COMPOSITION D'HUILE ET DE MATIÈRE GRASSE POUR DESSERT GLACÉ ET CHOCOLATS POUR DESSERT GLACÉ

(30) Priority: 22.05.2019 JP 2019095934
(43) Date of publication of application: 30.03.2022
(73) Proprietor: Fuji Oil Co., Ltd., Izumisano-shi, Osaka 598-8540 (JP)
(72) Inventor: KOJIMA, Makiko, Tsukubamirai-shi, Ibaraki 300-2436 (JP); YOKOHIGASHI, Yukako, Tsukubamirai-shi, Ibaraki 300-2436 (JP); SAKAMOTO, Mai, Izumisano-shi, Osaka 598-8540 (JP); NAKA, Tomomi, Izumisano-shi, Osaka 598-8540 (JP)
(74) Representative: Boult Wade Tennant LLP
(86) International application number: PCT/JP2020/008322
(87) International publication number: WO 2020/235170

(56) References cited:
- EP-A1- 1 813 155
- EP-A1- 2 822 392
- WO-A1-2016/159309
- BE-A1- 1 024 500
- JP-A- 2009 195 221
- JP-A- 2010 268 749
- JP-A- 2016 002 016
- US-A1- 2011 008 499
- JULIANA N RODRIGUES ET AL: "Chemical interesterification of milkfat and milkfat-corn oil blends", FOOD RESEARCH INTERNATIONAL, vol. 36, no. 2, 1 January 2003 (2003-01-01), AMSTERDAM, NL, pages 149 - 159, XP055308918, ISSN: 0963-9969, DOI: 10.1016/S0963-9969(02)00130-8

## Description

### Technical Field

The present invention relates to an interesterified fat composition for frozen dessert, the composition enables to provide a chocolate for frozen dessert with low saturated fatty acid content, soft biting under refrigeration, fast drying, moderate taste remaining, and rich taste. The present invention also relates to a chocolate for frozen dessert containing the interesterified fat composition for frozen dessert.

### Background Art

A frozen dessert such as ice cream is sometimes coated (coating) or kneaded (dropping) with oil-based food ingredients, such as chocolate, in order to add various tastes, prevent water migration, and add texture. Examples of suitability required for general fat composition for coating include thin and uniform coating, fast drying (solidification), no cracking after solidification, and good meltability in the mouth when eaten. In addition, it is important for a chocolate for frozen dessert to harmonize with the texture of the frozen dessert. However, a fat composition for frozen dessert, which solves all of these points, has not been obtained.

Therefore, a variety of fats have been proposed for use in chocolate for coating frozen dessert. For example, Patent Document 1 discloses selective interesterification of palm oil and liquid oil. In addition, Patent Document 2 discloses a method of achieving a specific solid fat content by using a specific amount of randomly interesterified fat of fat blend containing 70% by mass or more palm fractionated soft oil.

In addition, for example, Patent Document 3 discloses an oily food material for frozen dessert, which is used by dropping and mixing it into the dessert to exist in the form of granules or flakes, and POP component content in a fat composition of the material is 32% or more.

### Prior Art Documents

### Patent Documents

Patent Document 1: JP 2001-321076 A
Patent Document 2: JP 2010-268749 A
Patent Document 3: JP 2006-280209 A
BE1024500 relates to a process for the production of a bake-stable, fat-based filling comprising the steps of mixing at least a portion of an added fat composition with at least one filler to form a mixture; homogenizing this mixture at a temperature between 37°C and 85°C whereby the homogenized mixture formed is optionally subjected to a cooling step reaching a final temperature of less than 35°C, and then a stabilization step at a temperature between 12°C and 19°C.

### Summary of Invention

### Problems to be Solved by Invention

An object of the present invention is to provide an interesterified fat composition for frozen dessert, the composition enables to provide a chocolate for frozen dessert with low saturated fatty acid content, soft biting under refrigeration, fast drying, moderate taste remaining, and rich taste, as well as to provide a chocolate for frozen dessert containing the interesterified fat composition for frozen dessert.

### Means for Solving Problems

The present inventors have intensively studied to solve the above problems.

The fat described in Patent Document 1 has good solidification property, but in addition to a hard texture at biting, it has a problem of feeling oily due to poor meltability in the mouth despite its light flavor. In addition, Patent Document 1 relates to a selective interesterified fat and describes that a random interesterified fat would not be suitable for ice coating application. The fat described in Patent Document 2 has a problem of feeling oily and thin taste due to its high melting point and necessity of using a large amount of liquid oil to achieve a specific SFC.

The fat described in Patent Document 3 has a crispy, nut-like texture (crispy texture) due to a high POP component content in a fat composition of the fat, and may provide excessive contrast in texture with a frozen dessert dough.

The present inventors have continued the study. As a result, they have found that a chocolate for frozen dessert with low saturated fatty acid content, soft biting under refrigeration, fast drying, moderate taste remaining, and rich taste may be obtained by blending a specified amount of an interesterified fat composition for frozen dessert with a specific composition of constituent fatty acids and solid fat content (SFC). The present invention has been completed by these findings.

That is, the present invention relates to:
(1) an interesterified fat composition for frozen dessert, wherein the composition satisfies all of the following conditions (i) to (vii):
   (i) a content of saturated fatty acid in constituent fatty acids is 20.0 to 30.0% by weight;
   (ii) a content of saturated fatty acid having 8 to 10 carbon atoms in constituent fatty acids is 1.0 to 8.0% by weight;
   (iii) a content of saturated fatty acid having 20 or more carbon atoms in constituent fatty acids is less than 2.0% by weight;
   (iv) a content of stearic acid in constituent fatty acids is 5.0 to 15.0% by weight;
   (v) a weight ratio of palmitic acid/stearic acid in constituent fatty acids (P/St) is 0.5 to 2.5;
   (vi) solid fat content (SFC) at 5°C is less than 10.0% and SFC at 15°C is less than 6.0%; and
   (vii) a content of lauric acid in constituent fatty acids is less than 2.0% by weight;
(2) a chocolate for frozen dessert, comprising the interesterified fat composition for frozen dessert according to (1);
(3) the chocolate for frozen dessert according to (2), comprising 10.0 to 25.0% by weight the interesterified fat composition for frozen dessert and 10.0 to 45.0% by weight palm low melting point fraction, where the chocolate is used for coating the frozen dessert;
(4) the chocolate for frozen dessert according to (2) or (3), wherein the chocolate for frozen dessert further comprises lauric fat and the content of lauric fat is 25.0% by weight or less, and wherein the chocolate is used for coating the frozen dessert;
(5) the chocolate for frozen dessert according to (2), comprising 3.0 to 38.0% by weight of the interesterified fat composition for frozen dessert, wherein the chocolate is used for kneading or dropping into the frozen dessert by dropping or mixing the chocolate into the frozen dessert to exist in form of chips or flakes.

### Effects of Invention

The present invention enables to provide an interesterified fat composition for obtaining a frozen dessert with low saturated fatty acid content, soft biting under refrigeration, fast drying, moderate taste remaining, and rich taste, as well as a chocolate for frozen dessert containing the fat composition for frozen dessert.

### Mode for Carrying Out Invention

Hereinafter, the present invention will be described in detail.

A frozen dessert in the present disclosure is not particularly limited as long as a temperature of the dessert when eaten is a range of freezing temperature, but a typical examples of it include ice cream, ice milk and lacto ice defined by "Ministerial Ordinance Concerning Compositional Standards, Etc. for Milk and Milk Products, Japan", so-called "Ministerial Ordinance on Milk, etc.", and frozen dessert defined by "Standards for foods, additives, etc." issued by the Ministry of Health and Welfare, Japan.

An interesterified fat composition for frozen dessert of the present invention has a content of saturated fatty acid in the constituent fatty acids of 20.0 to 30.0% by weight, and more preferably the content of saturated fatty acid of 21.0 to 28.0% by weight. As used herein, saturated fatty acid refers to a saturated fatty acid having 8 or more carbon atoms, such as caprylic acid, capric acid, lauric acid, myristic acid, palmitic acid, stearic acid, arachidic acid, behenic acid, and lignosellinic acid. If the content of saturated fatty acid in the constituent fatty acids is higher than the upper limit, the chocolate may become too hard in biting. If the content of saturated fatty acid in the constituent fatty acids is below the lower limit, drying may be slow.

The interesterified fat composition for frozen dessert of the present invention has a content of saturated fatty acid having 8 to 10 carbon atoms, which is a medium chain fatty acid, in the constituent fatty acids of 1.0 to 8.0% by weight, more preferably, the content of saturated fatty acid having 8 to 10 carbon atoms of 1.5 to 7.0% by weight, and further preferably 2.0 to 6.0% by weight. If the content of saturated fatty acid having 8 to 10 carbon atoms is higher than the upper limit, drying may be slow. If the content of saturated fatty acid having 8 to 10 carbon atoms is below the lower limit, meltability in the mouth may be deteriorated.

The interesterified fat composition for frozen dessert of the present invention has a content of saturated fatty acid having 20 or more carbon atoms in the constituent fatty acids of less than 2.0% by weight, more preferably, the content of saturated fatty acid having 20 or more carbon atoms of 1.8% by weight or less, and further preferably, 1.5% by weight or less. If the saturated fatty acid content of 20 or more carbons is above the upper limit, meltability in the mouth may be deteriorated. For this reason, it is preferable not to use hydrogenated high-erucic rapeseed oil or hydrogenated mustard oil, which contains high amount of fat having 20 or more carbon atoms, in the fat composition for frozen dessert.

The interesterified fat composition for frozen dessert of the present invention has a content of stearic acid, which is a saturated fatty acid having 18 carbon atoms in the constituent fatty acids, of 5.0 to 15.0% by weight, and more preferably 6.0 to 13.0% by weight. If the content of stearic acid is higher than the upper limit, meltability in the mouth may be deteriorated. If the content of stearic acid is below the lower limit, the chocolate may become too hard in biting.

The interesterified fat composition for frozen dessert of the present invention has a weight ratio of palmitic acid/stearic acid (P/St) in the constituent fatty acids of 0.5 to 2.5, more preferably 0.6 to 2.0. If the P/St in the constituent fatty acids is higher than the upper limit, the chocolate may become too hard in biting. If the P/St in the constituent fatty acids is less than the lower limit, meltability in the mouth may be deteriorated.

The interesterified fat composition for frozen dessert of the present invention has a solid fat content (SFC) at 5°C of less than 10.0%, more preferably less than 7.0%. If the SFC at 5°C is higher than the upper limit, the chocolate for frozen dessert becomes too hard in biting and may be cracked.

The interesterified fat composition for frozen dessert of the present invention has an SFC at 15°C of less than 6.0%, and more preferably less than 4.0%. If the SFC at 15°C is higher than the upper limit, the chocolate for frozen dessert becomes too hard in biting and may be cracked.

The interesterified fat composition for frozen dessert of the present invention has a content of lauric acid, which is a saturated fatty acid having 12 carbon atoms in the constituent fatty acids, of less than 2.0% by weight, more preferably 1.5% by weight or less, and further preferably 1.0% by weight or less. If the content of lauric acid is higher than the upper limit, the chocolate may become too hard in biting.

The interesterified fat composition for frozen dessert of the present invention may have a content of trans acid in the constituent fatty acids of less than 2.0% by weight, more preferably 1.5% by weight or less, and further preferably 1.0% by weight or less.

The interesterified fat composition for frozen dessert of the present invention is preferably a random interesterified fat prepared by interesterifying a mixture of fats consisting of fat rich in medium chain fatty acid, fat in liquid form at 10°C, and fat rich in stearic acid.

In the present disclosure, a method for interesterification is not particularly limited, and the examples include a method using an alkaline catalyst such as sodium methylate or an enzyme such as lipase as a catalyst.

In the present disclosure, it is preferable to use medium chain triglyceride (MCT) as the fat rich in medium chain fatty acid. As used herein, MCT refers to a triglyceride composed of saturated fatty acids having 8 and 10 carbon atoms. In the present disclosure, the fatty acid composed of the medium chain fatty acid triglyceride is not particularly limited. And, it is preferred that fatty acids having 8 and 10 carbon atoms are contained at a ratio of 50:50 to 80:20. More preferably, the fatty acids having 8 and 10 carbon atoms are contained at a ratio of 60:40 to 70:30.

In the present disclosure, examples of the fat in liquid form at 10°C include soybean oil, rapeseed oil (canola oil), corn oil, cottonseed oil, olive oil, peanut oil, rice oil, safflower oil, and sunflower oil. More preferably, vegetable oil containing less than 15% by weight saturated fatty acid, such as corn oil, canola oil, high oleic safflower oil, high oleic sunflower oil, perilla oil, and further preferably, corn oil, canola oil, and high oleic sunflower oil, may be used.

As used herein, fat rich in stearic acid refers to a fat containing 25% by weight or more of stearic acid in the constituent fatty acids. The specific examples include preferably extremely hydrogenated oil, prepared from soybean oil, rapeseed oil, corn oil, sunflower oil, high-oleic sunflower oil, safflower oil, olive oil, cottonseed oil, or rice oil, which contains high amount of fatty acid having 18 carbon atoms in the constituent fatty acids, and preferably extremely hydrogenated oil of soybean oil, rapeseed oil, sunflower oil, high-oleic sunflower oil, or safflower oil, may be used. In addition, extremely hydrogenated oil of palm oil or palm fractionated oil may also be used, as long as it meets all the requirements of the present disclosure.

In addition, other examples of the fat rich in stearic acid include cocoa butter, shea fat, sal fat, ilipe fat, alanbracchia fat, high stearic/high oleic sunflower oil, interesterified oil used in the production of cacao butter substitute, and fractionated oil thereof, as a single fat or combination of two or more of them.

The chocolate for frozen dessert of the present invention is a food in which fat forms a continuous phase, substantially free of water, and are used for coating or covering a surface of frozen dessert dough. As used herein, "chocolate" includes not only chocolate, quasi chocolate and chocolate-utilizing food defined by the Japan Fair Trade Council of Chocolate Industry and the Japan Fair Trade Council of Chocolate-Utilizing Foods, but also includes fat-processed food containing fat, as an essential component, and auxiliary ingredients such as sugar, powdered milk, cocoa butter, fruit juice powder, fruit powder, taste improver, emulsifier, flavor, and colorant in any proportion.

The chocolate for frozen dessert of the present invention is not limited in shape and use thereof as long as the fat containing the above-mentioned interesterified fat composition for frozen dessert forms a continuous phase and is used in combination with the frozen dessert. Examples of the shape and use include "coating application" in which a frozen dessert is dipped in molten oil-based food material for frozen dessert to coat the surface of the dessert, and "kneading (dropping) application" in which molten oil-based food material for frozen dessert is dropped and mixed into a fluid frozen dessert, such as ice cream, to coagulate and exist in the form of chips or flakes in the dessert. The combination of the frozen dessert and the chocolate for the frozen dessert is not particularly limited, and examples of the combination include not only the case where the surface of the frozen dessert is evenly covered, but also the case where it is only partially covered. In addition, the examples include the case where these are locally combined, for example, the chocolate for frozen dessert is in the frozen dessert like marble or thin sheet by increasing an amount of drop of chocolate, and thereby chip or flake chocolates in the frozen dessert are combined each other and difficult to separate.

When the chocolate for frozen dessert of the present invention is used in the coating application, a content of the above interesterified fat composition for frozen dessert is preferably 10.0 to 25.0% by weight, more preferably 12.0 to 23.0% by weight, and further preferably 14.0 to 21.0% by weight. If the content of the interesterified fat composition for frozen dessert is less than the lower limit, it may not give a soft feeling of biting or a rich taste. If the content of the interesterified fat composition for frozen dessert is higher than the upper limit, drying may be slow.

The chocolate for coating frozen dessert of the present invention preferably contains palm low melting point fraction in addition to the above interesterified fat composition. In the present invention, palm low melting point fraction preferably has iodine value of 50.0 to 65.0, more preferably 53.0 to 63.0. A content of the palm low melting point fraction in the chocolate for coating frozen dessert is preferably 10.0 to 45.0% by weight, and more preferably 12.0 to 43.0% by weight in the chocolate for coating frozen dessert.

The chocolate for coating frozen dessert of the present invention may contain lauric fat in addition to the above interesterified fat composition and palm low melting point fraction. As used herein, lauric fat refers to a fat containing 40% by weight or more of saturated fatty acid having 12 carbon atoms in the constituent fatty acid composition of the fat. The specific Examples of the lauric fat include coconut oil, palm kernel oil, and a fat obtained by subjecting these oils to one or two or more physical or chemical treatments, such as hydrogenation, fractionation, and esterification. In the present invention, these fats may be used alone or in combination with two or more others. Preferably, coconut oil and/or palm kernel oil, and more preferably coconut oil may be used in terms of obtaining good meltability in the mouth and good snappiness. A content of the above lauric fat in the chocolate for coating frozen dessert is preferably 25.0% by weight or less in the chocolate for coating frozen dessert.

The chocolate for coating frozen dessert of the present invention may contain other fat, which is generally used for chocolate for coating frozen dessert, than the above fats to the extent that the effect of the present invention is not impaired. Examples of the other fat include cocoa butter contained in cacao mass and cocoa, and milk fat contained in whole milk powder. These may be used directly as fat, or as a processed fat thereof such as hydrogenated fat, fractionated fat, and interesterified fat thereof may also be used. A content of the other fat in the chocolate for coating frozen dessert is preferably 30.0% by weight or less. If the content of the other fat is higher than the upper limit, meltablity in the mouth may be deteriorated.

Total oil content of the chocolate for coating frozen dessert of the present invention is preferably 40.0 to 65.0% by weight, more preferably 45.0 to 63.0% by weight, and further preferably 50.0 to 60.0% by weight. If the total oil content is less than the lower limit, the viscosity of the chocolate for coating frozen dessert may increase during coating and drying may be slow. If the total oil content is higher than the upper limit, the taste of the chocolate for coating frozen dessert may become weak and oily. As used herein, the total oil content refers to the total amount of not only the oil content derived from fat, but also all the oil components contained in the raw materials of the chocolate such as cacao mass, cocoa, and milk powder.

When the chocolate for frozen dessert of the present invention is used as a chocolate for kneading (dropping) into frozen dessert, a content of the above interesterified fat composition for frozen dessert is preferably 3.0 to 38.0% by weight, more preferably 5.0 to 35.0% by weight. If the content of the interesterified fat composition for frozen dessert is less than the lower limit, taste of the chocolate may not be sufficiently remained. If the content of the interesterified fat composition for frozen dessert is higher than the upper limit, it may be kneaded into the dough and not become chips.

In the present invention, used for kneading (dropping) is used to mix the molten chocolate while dropping it into the frozen dessert, leaving chip or flake chocolates in the frozen dessert. This is a relatively popular application because it is easy to produce product which are dotted with chocolate with good meltability in the mouth in the frozen dessert without using special molding machine.

### Examples

Hereinafter, the present invention will be described in more detail by way of Examples. In the Examples, percentages and parts refer to weight basis.

Fatty acid analysis in the fat of the interesterified fat composition for frozen dessert was performed using gas chromatography. Trans-unsaturated fatty acid was measured according to the AOCS Official Method Ce 1h-05. SFC is measured according to IUPAC.2 150 (a) SOLID CONTENT DETERMINATION IN FATS BY NMR, with modifying the solidification temperature to -10°C instead of 0°C.

### (Fat A-1)

After mixing 30.0 parts by weight of high oleic sunflower oil, which has 86.0% oleic acid content in the constituent fatty acids, and 70.0 parts by weight of ethyl stearate, the mixture was subjected to interesterification using a lipase with 1,3-position selectivity to obtain a reaction oil. Ethyl ester was distilled off from the reaction oil, and then the reaction oil was subjected to solvent fractionation using acetone, and the mid fraction was decolorized and deodorized as usual to obtain fat A-1 (iodine value: 33.0, saturated fatty acid content: 64.2% by weight) as a refined oil.

### (Fat A-2)

The ethyl ester was distilled off from the reaction oil as in the case of fat A-1, and then the reaction oil was subjected to solvent fractionation using acetone, and the low melting point fraction was decolorized and deodorized as usual to obtain fat A-2 (iodine value: 58.0, saturated fatty acid content: 38.1% by weight) as a refined oil.

### (Interesterified Fat 1)

After mixing 5.0 parts by weight of medium chain fatty acid triglyceride (iodine value: 0.5 or less, saturated fatty acid content: 100% by weight, ratio of fatty acids of 8 and 10 carbon atoms: 60:40), 82.0 parts by weight of corn oil (iodine value: 123.0, saturated fatty acid: 14.5% by weight), and 13.0 parts by weight of fat A-1, the mixture was subjected to random interesterification reaction using sodium methylate as a catalyst. And then the obtained oil was decolorized and deodorized as usual to obtain interesterified fat 1 as refined oil.

### (Interesterified Fat 2)

After mixing 5.0 parts by weight of medium chain fatty acid triglyceride, 59.0 parts by weight of corn oil, and 36.0 parts by weight of fat A-2, the mixture was subjected to random interesterification reaction using sodium methylate as a catalyst. And then the obtained oil was decolorized and deodorized as usual to obtain interesterified fat 2 as refined oil.

### (Interesterified Fat 3)

After mixing 5.0 parts by weight of medium chain fatty acid triglyceride, 80.0 parts by weight of corn oil, 5.0 parts by weight of fat A-2, and 10.0 parts by weight of extremely hydrogenated palm oil (iodine value: 0.5 or less, saturated fatty acid: 100% by weight), the mixture was subjected to random interesterification reaction using sodium methylate as a catalyst. And then the obtained oil was decolorized and deodorized as usual to obtain interesterified fat 3 as refined oil.

### (Interesterified Fat 4, not according to the present invention)

After mixing 81.5 parts by weight of corn oil, and 18.5 parts by weight of fat A-1, the mixture was subjected to random interesterification reaction using sodium methylate as a catalyst. And then the obtained oil was decolorized and deodorized as usual to obtain interesterified fat 4 as refined oil.

### (Interesterified Fat 5, not according to the present invention)

After mixing 5.0 parts by weight of medium chain fatty acid triglyceride, 86.6 parts by weight of corn oil, and 8.4 parts by weight of coconut oil (iodine value: 8.5, saturated fatty acid: 91.6% by weight), the mixture was subjected to random interesterification reaction using sodium methylate as a catalyst. And then the obtained oil was decolorized and deodorized as usual to obtain interesterified fat 5 as refined oil.

Palm olein (manufactured by Fuji Oil Co., Ltd., iodine value: 57.0, saturated fatty acid: 45.8% by weight) was used as fat B.

Coconut oil, which was used as a raw material of interesterified fat 5, was used as fat C.

Cocoa butter (manufactured by Fuji Oil Co., Ltd., iodine value 35.0, saturated fatty acid: 62.4% by weight) was used as fat D.

**Table 1 Fat composition and SFC value**

| | Interesterified fat | | | | | Fat | | |
|---|---|---|---|---|---|---|---|---|
| | 1 | 2 | 3 | 4 | 5 | B | C | D |
| Content of saturated fatty acid (%) | 22.7 | 24.2 | 26.4 | 22.7 | 22.8 | 45.8 | 91.6 | 62.4 |
| Content of saturated fatty acid having 8 to 10 carbon atoms (%) | 3.4 | 3.7 | 3.4 | 0.0 | 4.5 | 0.0 | 11.2 | 0.0 |
| Content of saturated fatty acid having 20 or more carbon atoms (%) | 0.7 | 0.7 | 0.6 | 0.7 | 1.2 | 0.1 | 0.0 | 0.2 |
| Content of lauric acid in constituent fatty acids (%) | 0.0 | 0.0 | 0.0 | 0.0 | 3.6 | 0.2 | 47.5 | 0.0 |
| Content of palmitic acid in constituent fatty acids (%) | 9.6 | 8.9 | 13.9 | 10.0 | 10.3 | 40.5 | 9.6 | 25.9 |
| Content of stearic acid in constituent fatty acids (%) | 9.0 | 10.9 | 8.5 | 12.0 | 1.7 | 4.0 | 4.0 | 36.2 |
| Weight ratio of palmitic acid / stearic acid in constituent fatty acid | 1.1 | 0.8 | 1.6 | 0.8 | 6.1 | 10.1 | 2.4 | 0.7 |
| SFC at 5°C (%) | 2.0 | 2.5 | 3.5 | 4.6 | 2.5 | 44.7 | 93.2 | 91.3 |
| SFC at 15°C (%) | 1.0 | 1.3 | 2.3 | 2.5 | 0.1 | 20.8 | 68.7 | 84.6 |

### "Method for preparing chocolate for frozen dessert"

Chocolates for frozen dessert were prepared according to the formulations in Tables 2, 3, 5 and 6 below. The preparation conditions of the chocolates were according to known methods. That is, dough was prepared by mixing cocoa (oil content: 11.0% by weight), cacao mass, whole milk powder, lactose, sugar and appropriate amount of vegetable fat and lecithin with a mixer while heating. The prepared dough was finely granulated to a particle size of about 20 µm using a roll refiner (Three-roll mill SDY300, manufactured by BUHLER), and the remaining fat and lecithin were added to the dough, and then the dough was kneaded uniformly using a conching machine (concher) to obtain chocolates.

**Table 2 Formulation of chocolate for coating frozen dessert**

| | Formulation |
|---|---|
| Vegetable fat | 54.0 (%) |
| Sugar | 31.8 |
| Cocoa | 13.7 |
| Lecithin | 0.5 |

**Table 3 Fat formulation of chocolate for coating frozen dessert**

| | Examples | | | | | | Comparative Examples | | | |
|---|---|---|---|---|---|---|---|---|---|---|
| | 1 | 2 | 3 | 4 | 5 | 6 | 1 | 2 | 3 | 4 |
| Fat B | 37.0(%) | 37.0 | 37.0 | 35.0 | 14.0 | 17.0 | 17.0 | 34.0 | 17.0 | 17.0 |
| Fat C | | | | | | 20.0 | 37.0 | 20.0 | 20.0 | 20.0 |
| Interesterified fat 1 | 17.0 | | | 17.0 | 17.0 | 17.0 | | | | |
| Interesterified fat 2 | | 17.0 | | | | | | | | |
| Interesterified fat 3 | | | 17.0 | | | | | | | |
| Interesterified fat 4 | | | | | | | | | 17.0 | |
| Interesterified fat 5 | | | | | | | | | | 17.0 |
| Fat D | | | | 2.0 | 23.0 | | | | | |

### "Method for coating frozen dessert with chocolate"

The obtained chocolates for frozen dessert were heated to 50°C to completely molten the fat crystals, then cooled to 40°C and held at a constant temperature. Then, a commercially available ice pop (lacto ice, manufactured by Lotte Co., Ltd.) was taken out of the freezer at -18°C, quickly dipped into the chocolate at 40°C, pulled up after 1 second, and then the time taken for the surface of the coating chocolates to completely solidify was measured at room temperature of 20°C. After that, it was stabilized overnight in a quick freezer at -25°C.

### "Evaluation method for chocolate for coating frozen dessert"

The obtained coated ice pop was transferred to a household freezer (-15°C) one hour before tasting. Sensory evaluation was conducted by five panelists who are engaged in the development of material for frozen dessert and who are engaged in the daily trial production of frozen dessert, based on the following evaluation criteria. In this case, a grade of "O" and "⊙" was determined by the panel to be acceptable.

**Table 4 Evaluation of chocolate for coating frozen dessert**

| | Examples | | | | | | Comparative Examples | | | |
|---|---|---|---|---|---|---|---|---|---|---|
| | 1 | 2 | 3 | 4 | 5 | 6 | 1 | 2 | 3 | 4 |
| Drying | ○ | ○ | ○ | ⊙ | ⊙ | ○ | ○ | Δ | Δ | Δ |
| Biting | ○ | ○ | ○ | ○ | ○ | ○ | × | × | ○ | × |
| Body taste | ⊙ | ○ | ○ | ○ | ⊙ | ○ | × | ○ | ○ | × |

### "Evaluation criteria for chocolate for coating frozen dessert"

### Drying) Time for fully solidifying the surface of the coated chocolate.

⊙: Very fast.
○: Fast.
Δ: Average.
×: Slaw.

### Biting)

O: Soft, and plasticity was felt.
Δ: Soft, but plasticity was not felt.
×: Hard, or not soft biting.

### Body taste)

⊙: Taste was moderate remained, with a rich chocolate taste.
O: Taste was moderate remained, with a chocolate taste.
Δ: Taste was remained in the mouth, but continuousness of chocolate taste was short.
×: It was immediately molten, and no chocolate taste was felt.

**Table 5 Formulation of chocolate for kneading (dropping) into frozen dessert**

| | Formulation 1 | Formulation 2 |
|---|---|---|
| Vegetable fat | 45.7 (%) | 38.5 |
| Cacao mass | | 33.7 |
| Lactose | 30.5 | |
| Sugar | 16.6 | 27.5 |
| Whole milk powder | 6.8 | |
| Lecithin | 0.4 | 0.3 |

Examples 7, 8, 9, 10 and Comparative Examples 5 and 6 were prepared according to Formulation 1, and Example 11 was prepared according to Formulation 2, in Table 5 above.

**Table 6 Fat formulation of chocolate for kneading (dropping) into frozen dessert**

| | Examples | | | | | Comparative Examples | |
|---|---|---|---|---|---|---|---|
| | 7 | 8 | 9 | 10 | 11 | 5 | 6 |
| Fat B | | | 5.9 | | | | |
| Fat C | 32.7(%) | 21.8 | | 32.7 | | | 43.4 |
| Interesterified fat 1 | 10.9 | 21.8 | 5.9 | | 32.7 | 43.6 | |
| Interesterified fat 3 | | | | 10.9 | | | |
| Fat D | 2.1 | 2.1 | 33.8 | 2.1 | 5.8 | 2.1 | 2.3 |

### "Method for kneading (dropping) chocolate for frozen dessert into frozen dessert"

The chocolates for kneading (dropping) into frozen dessert obtained from the formulation in Table 5 were heated to 50°C to completely molten the fat crystals, then cooled to 30°C and held at a constant temperature. Commercially available vanilla ice cream (product name: "Vanilla Ice Cream", sold by Aeon Co., Ltd., ice cream, non-fat milk solids: 11%, milk fat: 10%) was stirred at low speed with a confectionery mixer to form a paste at a product temperature of -5 °C. While continuing stirring, the above chocolate, which has been tempered to 30°C, was dropped into the ice cream. In this way, the dropped chocolate was cooled by the ice cream, solidified into irregular shapes of a few millimeters in size, and were dispersed in the ice cream. The amount of chocolate to be dropped was set at 10% of the ice cream weight. After the chocolate was mixed, it was stabilized overnight in a quick freezer at -30°C.

### "Evaluation method for chocolate for kneading (dropping) into frozen dessert

The obtained frozen dessert containing chocolate chips, which were made by kneading (dropping) the chocolates for frozen dessert, was sensitively evaluated by five panelists based on the following evaluation criteria at a product temperature of around -10°C, i.e., a hardness that may be easily scooped with a spoon. In this case, a grade of "○" and "⊙" was determined by the panel to be acceptable.

**Table 7 Evaluation of chocolate for kneading (dropping) into frozen dessert**

| | Examples | | | | | Comparative Examples | |
|---|---|---|---|---|---|---|---|
| | 7 | 8 | 9 | 10 | 11 | 5 | 6 |
| Shape retention property of chip and coloring to dough | ⊙ | ○ | ⊙ | ⊙ | ○ | × | ⊙ |
| Presence | ○ | ○ | ⊙ | ○ | ⊙ | × | ○ |
| Taste remaining | ○ | ⊙ | ⊙ | ⊙ | ⊙ | × | × |

### "Evaluation criteria for chocolate for kneading (dropping) into frozen dessert"

### Shape retention property of chip and coloring to dough)

⊙: Chip size was moderate, and dough was not colored.
O: Chip size was moderate, and dough was slightly colored.
Δ: Chip size was small, and dough was colored.

×: Chocolate was fully kneaded and chip was not formed.

### Presence)

⊙: Presence of chips in the ice cream was very strong.
   ○: Presence of chips in the ice cream was strong.
   Δ: Presence of chips in the ice cream was felt but weak.
   ×: No presence of chips in the ice cream was felt.

### Taste remaining)

⊙: Taste was moderate remained, with a rich chocolate taste.
O: Taste was moderate remained, with a chocolate taste.
Δ: Taste was remained in the mouth, but continuousness of chocolate taste was short.
×: It was immediately molten, and chocolate taste was hard to felt.

All the chocolates for coating frozen dessert in the Examples containing the specified amount of the interesterified fat composition for frozen dessert of the present invention had soft biting under refrigeration, fast drying, moderate taste remaining, and rich taste.

In addition, all the chocolates for kneading (dropping) into frozen dessert in the Examples containing the specified amount of the interesterified composition for frozen dessert of the present invention maintained the presence of chips in the ice cream while also retaining the shape of the chips, had moderate taste remaining, and rich taste.

## Claims

1. An interesterified fat composition for frozen dessert, wherein the composition satisfies all of the following conditions (i) to (vii):
(i) a content of saturated fatty acid in constituent fatty acids is 20.0 to 30.0% by weight;
(ii) a content of saturated fatty acid having 8 to 10 carbon atoms in constituent fatty acids is 1.0 to 8.0% by weight;
(iii) a content of saturated fatty acid having 20 or more carbon atoms in constituent fatty acids is less than 2.0% by weight;
(iv) a content of stearic acid in constituent fatty acids is 5.0 to 15.0% by weight;
(v) a weight ratio of palmitic acid/stearic acid in constituent fatty acids (P/St) is 0.5 to 2.5;
(vi) solid fat content (SFC) at 5°C is less than 10.0% and SFC at 15°C is less than 6.0%; and
(vii) a content of lauric acid in constituent fatty acids is less than 2.0% by weight.

2. A chocolate for frozen dessert, comprising the interesterified fat composition for frozen dessert according to claim 1.

3. The chocolate for frozen dessert according to claim 2, comprising 10.0 to 25.0% by weight the interesterified fat composition for frozen dessert and 10.0 to 45.0% by weight palm low melting point fraction, wherein the chocolate is used for coating the frozen dessert.

4. The chocolate for frozen dessert according to claim 2 or 3, wherein the chocolate for frozen dessert further comprises lauric fat and the content of lauric fat is 25.0% by weight or less, and wherein the chocolate is used for coating the frozen dessert.

5. The chocolate for frozen dessert according to claim 2, comprising 3.0 to 38.0% by weight of the interesterified fat composition for frozen dessert, wherein the chocolate is used for kneading or dropping into the frozen dessert by dropping or mixing the chocolate into the frozen dessert to exist in form of chips or flakes.

## Patentansprüche

1. Umgeesterte Fettzusammensetzung für ein gefrorenes Dessert, wobei die Zusammensetzung alle der folgenden Bedingungen (i) bis (vii) erfüllt:
(i) ein Gehalt an gesättigter Fettsäure in den konstituierenden Fettsäuren beträgt 20,0 bis 30,0 Gewichts-%;
(ii) ein Gehalt an gesättigter Fettsäure mit 8 bis 10 Kohlenstoffatomen in der konstituierenden Fettsäuren beträgt 1,0 bis 8,0 Gewichts-%;
(iii) ein Gehalt an gesättigter Fettsäure mit 20 oder weniger Kohlenstoffatomen in den konstituierenden Fettsäuren beträgt weniger als 2,0 Gewichts-%;
(iv) ein Gehalt an Stearinsäure in den konstituierenden Fettsäuren beträgt 5,0 bis 15,0 Gewichts-%;
(v) ein Gewichtsverhältnis von Palmitinsäure/Stearinsäure in den konstituierenden Fettsäuren (P/St) beträgt 0,5 bis 2,5;
(vi) der Gehalt an festem Fett (SFC) beträgt bei 5 °C weniger als 10,0 % und der SFC bei 15 °C beträgt weniger als 6,0 %; und
(vii) ein Gehalt an Laurinsäure in den konstituierenden Fettsäuren beträgt weniger als 2,0 Gewichts-%.

2. Schokolade für ein gefrorenes Dessert, die die umgeesterte Fettzusammensetzung für ein gefrorenes Dessert nach Anspruch 1 umfasst.

3. Schokolade für ein gefrorenes Dessert nach Anspruch 2, umfassend 10,0 bis 25,0 Gewichts-% der umgeesterten Fettzusammensetzung für ein gefrorenes Dessert und 10,0 bis 45,0 Gewichts-% Palmfraktion mit niedrigem Schmelzpunkt, wobei die Schokolade zum Überziehen des gefrorenen Desserts verwendet wird.

4. Schokolade für ein gefrorenes Dessert nach Anspruch 2 oder 3, wobei die Schokolade für ein gefrorenes Dessert ferner Laurinfett umfasst und der Gehalt an Laurinfett 25,0 Gewichts-% oder weniger beträgt, und wobei die Schokolade zum Überziehen des gefrorenen Desserts verwendet wird.

5. Schokolade für ein gefrorenes Dessert nach Anspruch 2, die 3,0 bis 38,0 Gewichts-% der umgeesterten Fettzusammensetzung für ein gefrorenes Dessert umfasst, wobei die Schokolade zum Kneten oder Tröpfeln in das gefrorene Dessert verwendet wird, indem die Schokolade in das gefrorene Dessert getröpfelt oder gemischt wird, um in Form von Chips oder Flocken zu existieren.

## Revendications

1. Composition de graisse interestérifiée pour dessert glacé, dans laquelle la composition satisfait à toutes les conditions suivantes (i) à (vii) :
(i) une teneur en acide gras saturé dans des acides gras constitutifs est comprise entre 20,0 et 30,0 % en poids ;
(ii) une teneur en acide gras saturé ayant 8 à 10 atomes de carbone dans les acides gras constitutifs est de 1,0 à 8,0 % en poids ;
(iii) une teneur en acide gras saturé ayant 20 atomes de carbone ou plus dans les acides gras constitutifs est inférieure à 2,0 % en poids ;
(iv) une teneur en acide stéarique des acides gras constitutifs est comprise entre 5,0 et 15,0 % en poids ;
(v) un rapport en poids entre l'acide palmitique et l'acide stéarique dans les acides gras constitutifs (P/St) est compris entre 0,5 et 2,5 ;
(vi) la teneur en matières grasses solides (SFC) à 5 °C est inférieure à 10,0 % et la SFC à 15 °C est inférieure à 6,0 % ; et
(vii) une teneur en acide laurique des acides gras constitutifs est inférieure à 2,0 % en poids.

2. Chocolat pour dessert glacé, comprenant la composition de matière grasse interestérifiée pour dessert glacé selon la revendication 1.

3. Chocolat pour dessert glacé selon la revendication 2, comprenant 10,0 à 25,0 % en poids de la composition de graisse interestérifiée pour dessert glacé et 10,0 à 45,0 % en poids de la fraction palmaire à bas point de fusion, dans lequel le chocolat est utilisé pour enrober le dessert glacé.

4. Chocolat pour dessert glacé selon la revendication 2 ou 3, dans lequel le chocolat pour dessert glacé comprend en outre de la graisse laurique et la teneur en graisse laurique est de 25,0 % en poids ou moins, et dans lequel le chocolat est utilisé pour enrober le dessert glacé.

5. Chocolat pour dessert glacé selon la revendication 2, comprenant de 3,0 à 38,0 % en poids de la composition de graisse interestérifiée pour dessert glacé, dans lequel le chocolat est utilisé pour le pétrissage ou l'incorporation dans le dessert glacé en faisant tomber ou en mélangeant le chocolat dans le dessert glacé pour qu'il se présente sous forme de copeaux ou de flocons.
